(19) Europäisches Patentamt
European Patent Office
Office européen des brevets

(11) **EP 2 296 435 B1**

(12) **EUROPEAN PATENT SPECIFICATION**

(45) Date of publication and mention
of the grant of the patent:
**06.05.2015 Bulletin 2015/19**

(51) Int Cl.:
***H05B 6/06*** (2006.01)

(21) Application number: **09170016.1**

(22) Date of filing: **11.09.2009**

(54) **Method for detecting and compensating noises in induction heating systems for domestic and professional kitchen and induction heating system using such method**

Verfahren zur Erkennung und zum Ausgleich von Rauschen in Induktionsheizsystemen in Küchen für den Haus- und Profigebrauch und Induktionsheizsystem mit diesem Verfahren

Procédé de détection et de compensation de bruits dans des systèmes de chauffage par induction pour la maison et les cuisines professionnelles et système de chauffage par induction utilisant ledit procédé

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**16.03.2011 Bulletin 2011/11**

(73) Proprietors:
  • **WHIRLPOOL CORPORATION**
    **Benton Harbor**
    **Michigan 49022 (US)**
  • **TEKA Industrial S.A.**
    **39011 Santander (ES)**

(72) Inventors:
  • **Gutierrez, Diego N.**
    **21025, Comerio (IT)**

  • **Calesella, Carlo**
    **21025, Comerio (IT)**
  • **Del Bello, Francesco**
    **21025, Comerio (IT)**
  • **Paderno, Jurij**
    **21025, Comerio (IT)**

(74) Representative: **Guerci, Alessandro**
    **Whirlpool Europe S.r.l.**
    **Patent Department**
    **Viale G. Borghi 27**
    **21025 Comerio (VA) (IT)**

(56) References cited:
    **WO-A2-02/17684**

**Description**

The present invention relates to a method for detecting and/or compensating the effects of disturbances in controlling induction heating systems, particularly the effects of disturbances in monitoring and controlling the temperature of cooking vessels and the content thereof. More particularly, the present invention relates to a method applied to controls comprising means for detecting at least an electrical parameter correlated to power delivered by the induction heating system.

It is known in patent literature that in several applications one or more electrical signals are observed because of their typical correlation with the temperature of the cooking vessel or its content. However such correlation is usually not robust enough due to several exogenous disturbances as could be e.g. mains voltage variations, electrical measurement noises or cooking vessel movements. This lack of robustness can lead to a decrease of performances or even to unexpected behavior of the system.

WO 02/17684 A2 discloses an induction heating and control system having an integrated voltage, power and thermal management. In such document the temperatures are measured through specific sensors.

For the sake of simplicity, in the remainder of this specification the word "noise" will be used to identify any type of disturbances that can affect the correlation between the observed electrical measurement(s) and the temperature of the cooking vessel and/or its content.

The basic structure of an induction heating system consists indeed of a power converter connected to an induction coil, thus every induction heater includes means for monitoring some electrical magnitudes of the system. Therefore, the aim of the invention is critical because every kind of control must rely on such electrical magnitudes, unless further expensive sensors are added to the system.

Knowing that a fundamental control consists in regulating the power supplied to induction heating systems and therefore to cooking vessels, other typical applications are temperature control, boil detection and its derived controls (like empty pot detection, boil dry detection or frying control). Unless further sensors are added to the system, these controls rely on the correlation of one or more electrical magnitudes with the observed process.

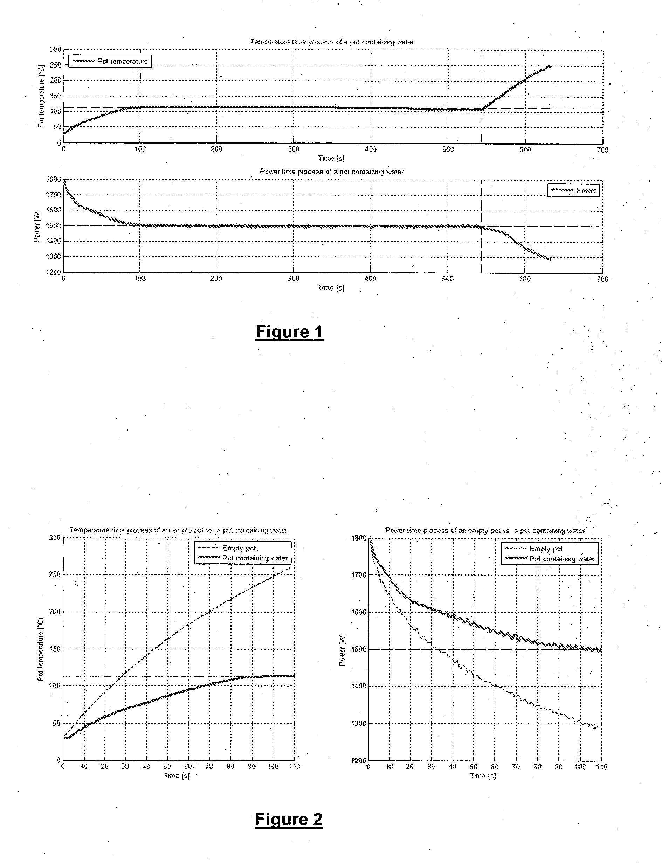

Figure 1 shows the typical behavior of a pot containing water when it is heated from ambient temperature to boiling temperature. After a certain time period, water reaches boiling temperature and this condition is reflected in pot's temperature. Afterwards, when all water is evaporated, the pots' temperature restarts rising.

In this example the pot is heated with an induction heater supplied at constant frequency. Supplied power is the measured electrical magnitude which is correlated with temperature, so by monitoring the power the control system can detect when water starts boiling and when all water is evaporated (boil dry).

Figure 2 shows a comparison between the behavior of an empty pot and the same pot containing water when the pot is heated with an induction heater supplied at constant frequency:

1. Pot containing water - before reaching boiling condition, the pot temperature roughly increases according to an exponential function of time; after boiling, pot temperature is almost constant ($T_1$ > Water boiling temperature). In other words, pot temperature achieves an almost constant temperature in a finite time. Hence the behavior after the boiling is different from the previous one.

2. Empty pot - pot temperature roughly increases according to an exponential function of the time; in this case pot temperature rises faster than in the previous case (pot + water). The temperature tends to stabilize to a horizontal asymptote (at $T_2 > T_1$).

Because of the correlation between the measured power and the pot temperature, the control system can distinguish two cases (pot + water vs. empty pot). These examples show the variations of power during time due to the evolution of target physical process being observed (pot temperature). This approach is not robust enough since the measured power is correlated to many variables other than the pot temperature: all electrical variables are heavily affected by uncontrollable processes like pot mismatching or power supply fluctuations. If such a "noise" occurs, the expected slope of power is altered and the control, which can be based on the analysis of time-varying magnitudes, has a high probability to fail.

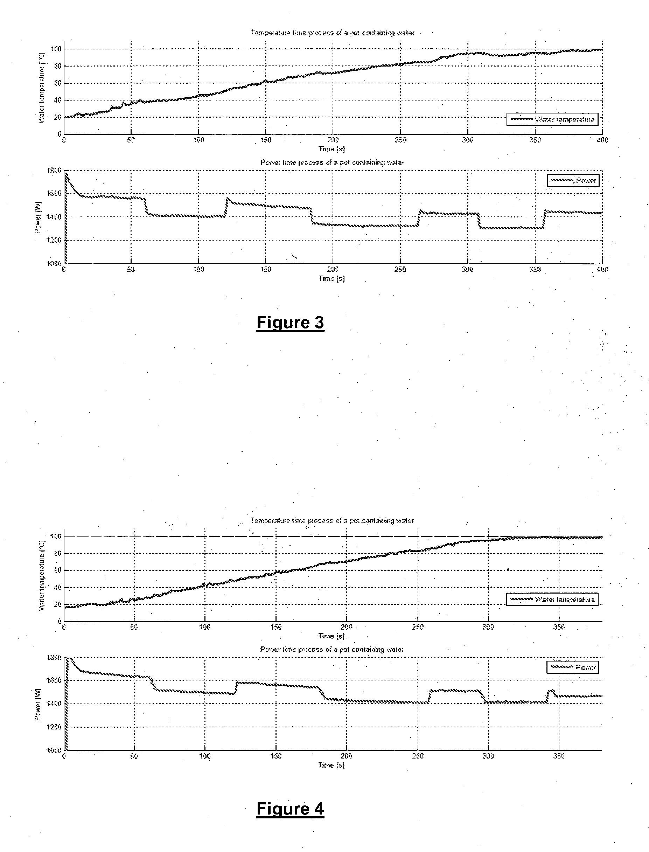

Figure 3 shows the effect of pot mismatching on the time process of power. In this test, pot mismatching consists in a displacement of 4-5 cm of the pot, occurred in a time lower than one second. The power signal shows a 20% level shift in correspondence of each pot mismatching, while temperature signal is almost unaffected by pot mismatches.

Figure 4 shows the effect of line voltage fluctuation on the time process of power. In this test, line voltage fluctuation consists in 5-6 V fluctuation, occurred in a time varying from one to three second. Line voltage noises have been produced with the same time distribution of the pot mismatches of figure 3, in order to put in evidence how pot mismatches and line voltage fluctuation have a very similar effect on the power signal.

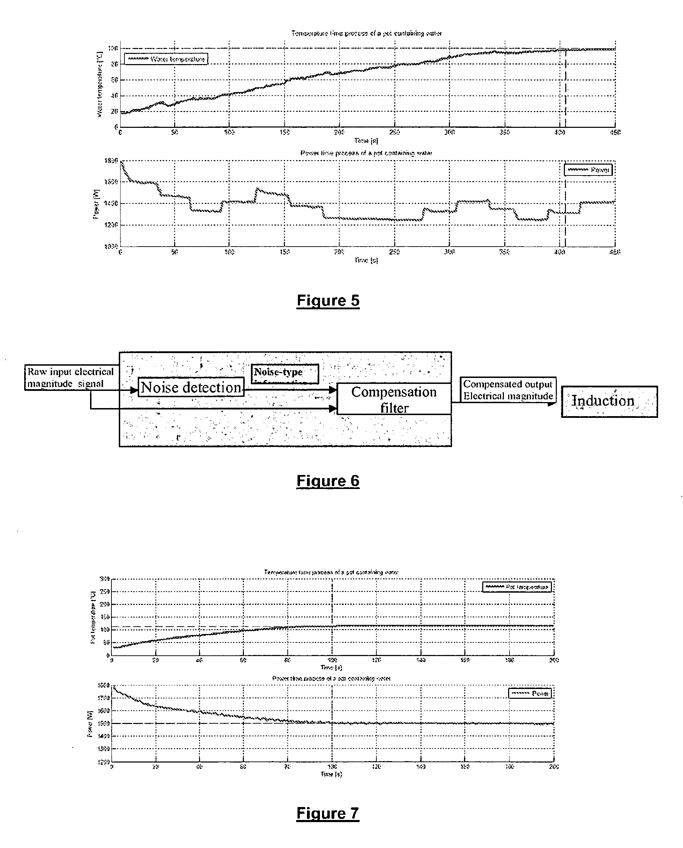

Figure 5 shows the effect of simultaneous pot mismatching and line voltage fluctuation on the time process of power. The test shows that a displacement of 4-5 cm of the pot or a line voltage variation of 5-6 V may cause the power output to vary up to a hundred Watts. As a result, the correlation between power and temperature results highly compromised: indeed, the expected asymptotic behavior of power vs. time in correspondence to the boiling point is no longer evident. With such a power input signal, the induction control would have failed to sense when water starts boiling.

Methods for relative temperature control using an electrical magnitude of the system, and derived techniques like boil or dry detection, are well known from EP1732357A2 and EP1420613A2.

Both these prior art documents are based on the assumption that the time process of the reference electrical magnitude reflects the time process of the pot temperature. However, this is true only in absence of relevant concurrent processes. For example, line voltage fluctuations or pot mismatches have a high impact on all electrical magnitudes of the system. A line voltage fluctuation of 1-2 volts and/or a pot displacement of 1-2 centimeters during the process cause a heavy loss of correlation between the time processes of pot temperature and electrical magnitudes.

In real applications both pot mismatching and main line fluctuation are very common, therefore the methods presented by documents EP1732357A2 and EP1420613A2 have a low robustness. Although it may be required to the user to avoid pot's movements, he/she may complain about this limitation and, moreover, a similar request does not make sense for voltage variations, thus making the known control methods inapplicable or imprecise.

An object of the present invention is to provide a method for solving the above mentioned problems, i.e. a method for detecting and eventually compensating the effect of all the disturbances that affect the functions that monitor and/or control the temperature of the cooking vessel and/or its content on the basis of at least one electrical measurement correlated to the temperature of thereof.

This detection and compensation is totally absent in prior art, and it is necessary for the applicability of relative temperature controls using electrical magnitude(s) of the system in every real application, where robustness to typical noises must be guaranteed.

The invention proposes a compensation process of the electrical magnitude, measured by induction control that outputs a compensated signal. This compensated signal can be used in substitution of the raw input signal or can be used together with it as further information about the process. In this way the robustness of the monitoring control functions are guaranteed even in presence of noises.

The method comprises two steps, a noise detection step and a calculation of a noise-compensated output signal (as shown in the diagram of figure 6).

The first step (Step 1) may be more precisely defined as a detection of electrical noise presented in the targeted electrical magnitude(s), correlated to the targeted physical process being controlled or monitored.

The noise detection block distinguishes the noise (time variations due to other concurrent processes) from the actual time-varying electrical magnitude that is correlated (in absence of noises) with the temperature of the pot.

The expected magnitude time behavior depends on the specific process being observed. For example, figure 4 shows the typical power slope of an induction heater in constant frequency mode heating a pot containing water from ambient temperature to boiling temperature.

The power signal shown in figure 7 is unaffected by critical noises (like pot mismatching or line voltage fluctuations). There are just small fluctuations due to the tolerance of the hardware sensing circuits. The dynamic of the magnitude is similar to the pot temperature. It can be observed that the power signal decreases monotonically, and that the maximum time gradient of power is -20W/s The first derivative of power has its maximum value at the beginning of the process, then it tends to zero as the boiling point gets closer. Once the boiling starts, power level never changes (until all water evaporates).

The noise detection block may e.g. simply consist of a band pass-type filter centered in the frequency of the electrical magnitude that are being observed in order to detect better the presence of electrical noise disturb whose frequency components are different from the targeted physical phenomenon being observed. Moreover, the type of detected noise can be estimated on the basis of the frequency components sensed by the noise detection filter. The information of which kind of electrical noise have been detected is passed to the compensation filter block that implements the best-fitted compensation filter for compensating the input signal against the specific noise having been detected.

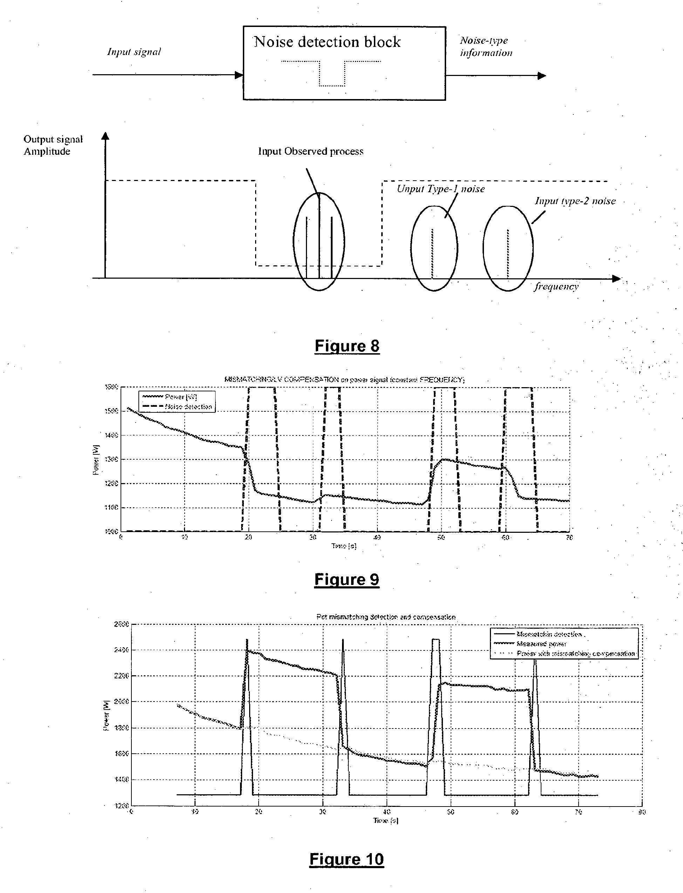

As an example, in figure 8 it is illustrated a magnitude-frequency response curve of a band pass filter of the noise detection block.

Here below is shown an example of filter for the noise detection block where a high pass filter have been implemented as the noise frequencies are higher than the targeted physical process being observed.

The noise disturb is caused by pot mismatching and main line fluctuation. The conditions of the filter are:

- value of the first derivative non-monotonically decreasing $\rightarrow$ $\dfrac{dP}{dt} > 0$

- $\left| \dfrac{dP}{dt} \right| > \dot{P}_{threshold}$   (The thresholds depends on the physical process to be controlled)

After a noise condition is detected, the noise detection block sent a signal to the compensation block that informs it if the input signal is disturbed by noise and which kind of noise it is. The noise detection block keeps analyzing the raw input signal in order to detect when the electrical noise disappears.

Figure 9 shows an example of application of the noise detection on a power signal (solid line) affected by pot mismatching noises. Noise detection signal (dotted line) is at high level during noise detection periods.

The second step of the method (Step 2) is a calculation of the noise-compensated output signal.

Once the noise detection is fulfilled, the compensation filter is applied to the input signal. The compensated output signal shows the expected time variation of the input signal as it were unaffected by noises.

Here below we present some examples of how to build compensated output signals. The different ways of compensating the input signal will depend on the dynamic of the targeted physical phenomenon and the kind of electrical noise having detected by the noise detection block.

One way of compensation filter is to "freeze out" the output signal whenever a noise is detect, so the output signal would remain equal to the last input value before noise is detected. Once noise detection condition isn't detected anymore, the output signal is equal to the input plus an offset, which is calculated as the difference between last input value before noise detection and first value after noise detection.

Figure 10 shows input power signal affected by pot mismatching noise, the noise detection signal, and the compensated power signal generated as detailed above. The compensated output signal preserves the dynamic of the physical process that is observed by the control.

Offset after noise detection condition can be calculated as follows:

P is the input signal, Pb is the last input signal value before noise has been detected, Pa is the first input signal value after the end of noise detection and Pa+i are the input signal values after Pa, Poutput is the compensated output signal:

$$\begin{cases} \mathit{offset} = P_a - P_b \\ \widehat{Poutput}_{a+i} = P_{a+i} + \mathit{offset} \\ \quad i=1,2,...,n \end{cases}$$

Instead of just adding an offset after noise detection, it is also possible to normalize the output power versus the input value before the noise condition. This way allows a more realistic signal compensation as it takes into account how the power rises or falls affect the time slope of the electrical magnitude correlation vs. the observed physical phenomenon:

Pb is the last signal value before noise condition.

Pa is the first signal value after the end of noise condition.

Pa+i are the normalized output signal values after Pa.

$$\begin{cases} K_{norm} = \dfrac{P_b}{P_a} \\ \widehat{Poutput}_{a+i} = K_{norm} \cdot P_{a+i} \\ \quad i=1,2,...,n \end{cases}$$

In case the method of "freezing out" the compensated output signal during noise detection time interval isn't acceptable for the control as it may need a time-varying signal all the time and cannot accept "frozen-out" input signal for a long time interval, it is possible to use a predictable model that estimate noise-free time varying magnitude meanwhile the noise condition is being detected based on past input signals. The type of used predictable model can be tuned based on the information of the kind of electrical noise having been detected, in order to estimate as best as possible the observed magnitude.

A simple predictive model could be based on linear regression of the last N signal values before noise detection. Being {(P1,t1),(P2,t2),...,(PN,tN)} the last N samples of the signal P, signal prediction rule for time tk while a noise condition is detected:

$$P_k = \{P_{k-1}, \ldots, P_{k-N}\}$$
$$t_k = \{t_{k-1}, \ldots, t_{k-N}\}$$
$$(m_k, q_k) = LR(P_K, t_k, N) \quad LR = \text{Linear Regression of last N samples } (P_i, t_i)$$
$$\hat{P}_k = m_k \cdot t_k + q_k$$

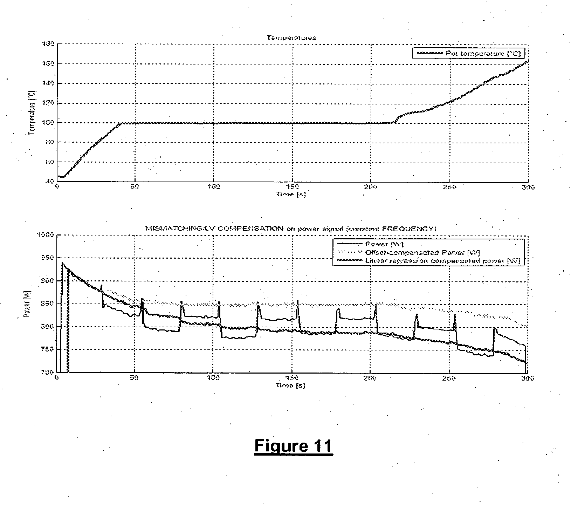

Figure 11 shows a comparison between a frozen-out offset-compensated signal and a linear regression compensated signal that presents an evident more realistic behavior.

Once the noise condition isn't detected anymore, the output signal value is calculated as the input signal plus an offset which is calculated as the difference between the last predicted Pk value and first value after noise detection.

$$\begin{cases} offset = P_a - P_k \\ \hat{P}_{a+i} = P_{a+i} + offset \\ \scriptstyle i=1,2,\ldots,n \end{cases}$$

Instead of calculating and adding the offset, it can be normalized as described here below:

$$\begin{cases} K_{norm} = \dfrac{P_k}{P_a} \\ \hat{P}_{a+i} = K_{norm} \cdot P_{a+i} \\ \scriptstyle i=1,2,\ldots,n \end{cases}$$

Other prediction method other than linear regression like exponential once can be applied as well. The kind of physical phenomenon of the pot to be observed must determine what the most efficient prediction method to be applied is.

The invention presents an original solution to the problem of noises in controlling induction cooktops, allowing the use of methods for observed temperature process control using electrical magnitude(s) of the system in real applications, even in presence of pot displacements, unstable line voltage or other noise sources.

The presented method describes a modular algorithm that detects noise disturbances and compensates the input signal of the targeted magnitude in a way totally transparent for the induction control. Little computational resources are required, allowing implementation in chip microcontrollers. Different variants of implementations of the method were presented. The case of pot mismatching and line voltage fluctuation was analyzed explicitly, and a general method is proposed to extend or calibrate the detection and compensation function to other specific noises.

Other variants of the method, presenting different implementations with different performances, may be used as well, according to measuring apparatus available on the system and output requirements of existing functions.

**Claims**

1. Method for detecting and compensating the effects of disturbances in controlling induction heating systems in which the temperature of the cooking vessel and/or its content is monitored and/or controlled on the basis of at least one electrical. measurement correlated to said temperature and particularly the effect of cooking vessel movements and/or mains line voltage fluctuation and similar electrical noises, **characterized in that** the method comprises a first step defined as a detection of electrical noise presented in the targeted electrical magnitude(s), correlated to the targeted physical process being controlled or monitored, wherein the noise is distinguished from the actual time-varying electrical magnitude that is correlated with the temperature of the pot, and a second step of calculating a noise-compensated output signal.

2. Method according to claim 1, in which the induction heating system comprises power transistors, wherein the switching frequency of said power transistors is kept constant and the measured electrical signal varies with time and is correlated to the temperature of the cooking vessel, the electrical signal being preferably the power or current absorbed by the heating system.

3. Method according to claim 1, in which the induction heating system comprises power transistors, wherein the power delivered to the cooking vessel is kept constant and the measured electrical signal varies with time and is correlated to the temperature of the cooking vessel, the electrical signal being preferably the switching frequency of the power transistors.

4. Method according to claim 1, in which the induction heating system comprises power transistors, wherein the current absorbed by the device is kept constant and the measured electrical signal(s) varies with time and is-correlated to the temperature of the cooking vessel, the electrical signal being preferably the switching frequency of the power transistors.

5. Method according to claim 1, wherein the temperature of the cooking vessel or its content is kept constant using one or more measured electrical signals that are correlated to the temperature of the cooking vessel or its content, respectively, the measured electrical signal being preferably the power or current absorbed by the heating system.

6. Method according to any of the preceding claims, wherein the control of the induction heating system is obtained as a combination of one or more of the controls described in the above claims and the measured electrical signal varies with time and is correlated to the temperature of the cooking vessel.

7. Method according to claim 6, wherein the control of the induction heating system is obtained as a repeating pattern of two or more controls described in the above claims.

8. Method according to any of the preceding claims, wherein the detection and/or compensation of the disturbances is based on the monitoring of the first derivative of the signal.

9. Method according to claim 1-8, wherein the compensation of the disturbances is calculated on the basis of applying an offset corresponding to the difference between the signals before and after the change being added to or subtracted from the signal.

10. Method according to claim 1-8, wherein the compensation of the disturbances is calculated on the basis of the following criteria:

$$\begin{cases} K_{level} = f_{lvl}(P_a) \\ K_{norm} = \dfrac{P_b}{P_a} \\ \hat{P}_{a+i} = K_{level} \cdot K_{norm} \cdot P_{a+i} \\ \quad i=1,2,\dots,n \end{cases}$$

Where:

$P$ is the measured electrical signal;
$K_{level}$ is a coefficient or a function $f_{lvl}$, of the power level ;
$K_{norm}$ is a normalization factor;
$P_b$ is the last signal value before disturbance has been detected;
$P_a$ is the first signal value after the end of disturbance, and;
$P_{a+i}$ are the signal values after $P_a$;

11. Method according to any of the preceding claims, wherein the signal is cut after the detection of change and it is not used in the control for calculating a compensated value for a predetermined time interval.

12. Method according to any of the claims 1-10, wherein after the change is detected, the signal is maintained constant for a predetermined time interval and equal to the value of the signal before the change is detected.

13. Method according to any of the preceding claims, wherein the electrical parameter is chosen in the group consisting of frequency, current, voltage, power factor or a combination thereof.

14. Induction heating system, particularly for heating cooking vessels or the like, it comprises a control unit capable of detecting and/or compensating the effects of disturbances on the induction heating system that monitor and/or control the temperature of the cooking vessel and/or its content on the basis of at least one electrical measurement correlated to the temperature thereof, particularly the effect of cooking vessel movements and/or mains line voltage fluctuation and any electrical measurement noise, **characterised in that** such control unit is adapted to carry out a first step defined as a detection of electrical noise presented in the targeted electrical magnitude(s), correlated to the targeted physical process being controlled or monitored, the noise being distinguished from the actual time-varying electrical magnitude that is correlated with the temperature of the pot, and a second step of calculating a noise-compensated output signal.

15. Induction heating system according to claim 14, wherein the heating system comprises power transistors; in which the control unit is capable of keeping constant the switching frequency of said power transistors, the measured electrical signal varying with time and being correlated to the temperature of the cooking vessel, such measured electrical signal being preferably the power or current absorbed by the heating system.

**Patentansprüche**

1. Verfahren zum Erfassen und zum Kompensieren der Auswirkungen von Störungen beim Regeln von Induktionserwärmungssystemen, bei denen die Temperatur des Garbehälters und / oder dessen Inhalts überwacht und / oder geregelt wird, auf der Grundlage wenigstens eines mit der Temperatur verknüpften elektrischen Messwerts, insbesondere der Auswirkung von Bewegungen des Garbehälters und / oder Schwankungen in der Netzspannung und ähnlichem elektrischen Rauschen, **dadurch gekennzeichnet, dass** das **Verfahren einen ersten Schritt, definiert als Erfassen von elektrischem Rauschen, das in der oder den untersuchten elektrischen Größenordnung(en) vorliegt, verknüpft mit dem untersuchten geregelten oder überwachten physikalischen Vorgang, wobei sich das Rauschen dadurch von der normalen zeitabhängig schwankenden Größenordnung unterscheidet, dass es mit der Temperatur des Topfes verknüpft ist, und einen zweiten Schritt zum Berechnen eines rauschkompensierten Ausgabesignals umfasst**.

2. Verfahren nach Anspruch 1, wobei das Induktionserwärmungssystem Leistungstransistoren umfasst, wobei die Schaltfrequenz der Leistungstransistoren konstant gehalten wird und das gemessene elektrische Signal zeitabhängig schwankt und mit der Temperatur des Garbehälters verknüpft ist, wobei das elektrische Signal vorzugsweise die Leistung oder der Strom ist, die / der vom Erwärmungssystem aufgenommen wird.

3. Verfahren nach Anspruch 1, wobei das Induktionserwärmungssystem Leistungstransistoren umfasst, wobei die an den Garbehälter gelieferte Leistung konstant gehalten wird und das gemessene elektrische Signal zeitabhängig schwankt und mit der Temperatur des Garbehälters verknüpft ist, wobei das elektrische Signal vorzugsweise die Schaltfrequenz der Leistungstransistoren ist.

4. Verfahren nach Anspruch 1, wobei das Induktionserwärmungssystem Leistungstransistoren umfasst, wobei die von dem Gerät aufgenommene Stromstärke konstant gehalten wird und das oder die gemessene(n) elektrische(n) Signal(e) zeitabhängig schwanken und mit der Temperatur des Garbehälters verknüpft sind / ist, wobei das elektrische Signal vorzugsweise die Schaltfrequenz der Leistungstransistoren ist.

5. Verfahren nach Anspruch 1, wobei die Temperatur des Garbehälters oder dessen Inhalts unter Einsatz von einem oder mehreren gemessenen elektrischen Signalen konstant gehalten wird, die mit der Temperatur des Garbehälters beziehungsweise dessen Inhalts verknüpft sind, wobei das gemessene elektrische Signal vorzugsweise die Leistung oder der Strom ist, die / der vom Erwärmungssystem aufgenommen wird.

6. Verfahren nach einem der vorhergehenden Ansprüche, wobei das Regeln des Induktionserwärmungssystems als Kombination aus einem oder mehreren der in den obigen Ansprüchen beschriebenen Regelungen erreicht wird und das gemessene elektrische Signal zeitabhängig schwankt und mit der Temperatur des Garbehälters verknüpft ist.

7. Verfahren nach Anspruch 6, wobei das Regeln des Induktionserwärmungssystems als sich wiederholendes Muster von zwei oder mehr der in den obigen Ansprüchen beschriebenen Regelungen erreicht wird.

8. Verfahren nach einem der vorhergehenden Ansprüche, wobei das Erfassen und / oder das Kompensieren der Störungen auf dem Überwachen der ersten Ableitung des Signals basiert.

9. Verfahren nach Anspruch 1-8, wobei die Kompensierung der Störungen auf der Grundlage des Einsetzens eines Versatzes berechnet wird, der der Differenz zwischen den Signalen vor der Änderung, subtrahiert von den Signalen nach der Änderung entspricht.

10. Verfahren nach Anspruch 1-8, wobei die Kompensierung der Störungen auf der Grundlage der folgenden Kriterien berechnet wird:

$$\begin{cases} K_{level} = f_{hl}(P_a) \\ K_{norm} = \dfrac{P_b}{P_a} \\ \tilde{P}_{a+i} = K_{level} \cdot K_{norm} \cdot P_{a+i} \\ \quad i=1,2,...,n \end{cases}$$

Hierbei gilt:

P ist das gemessene elektrische Signal;
$K_{level}$ ist ein Koeffizient oder eine Funktion $f_{|v|}$ des Leistungspegels;
$K_{norm}$ ist ein Normalisierungsfaktor;
$P_b$ ist der letzte Signalwert vor dem Feststellen der Störungen;
$P_a$ ist der erste Signalwert nach dem Ende der Störungen, und;
$P_{a+i}$ sind die Signalwerte nach $P_a$.

11. Verfahren nach einem der vorhergehenden Ansprüche, wobei das Signal nach dem Erfassen der Änderung beendet wird und für die Dauer eines vorherbestimmten Zeitintervalls nicht zum Regeln eines kompensierten Werts eingesetzt wird.

12. Verfahren nach einem der Ansprüche 1-10, wobei das Signal nach dem Feststellen der Änderung für die Dauer eines vorherbestimmten Zeitintervalls konstant und auf dem Wert des Signals vor dem Feststellen der Änderung gehalten wird.

13. Verfahren nach einem der vorhergehenden Ansprüche, wobei der elektrische Parameter ausgewählt wird aus der Gruppe bestehend aus Frequenz, Stromstärke, Spannung, Leistungsfaktor, oder einer Kombination aus diesen.

14. Induktionserwärmungssystem, insbesondere zum Erwärmen von Garbehältern und Ähnlichem, umfassend eine Regeleinheit, die in der Lage ist, die Auswirkungen von Störungen auf das Induktionserwärmungssystem, das die Temperatur des Garbehälters und / oder dessen Inhalts auf der Grundlage wenigstens eines mit dessen Temperatur verknüpften elektrischen Messwerts überwacht und / oder regelt, zu erfassen und / oder zu kompensieren, insbesondere der Auswirkung von Bewegungen des Garbehälters und / oder Schwankungen in der Netzspannung und jeglichem gemessenen elektrischen Rauschen, **dadurch gekennzeichnet, dass** die Regeleinheit angepasst ist, Folgendes auszuführen: **einen ersten Schritt, definiert als Erfassen von elektrischem Rauschen, das in der oder den untersuchten elektrischen Größenordnung(en) vorliegt, verknüpft mit dem untersuchten geregelten oder überwachten physikalischen Vorgang, wobei sich das Rauschen dadurch von der normalen zeitabhängig schwankenden Größenordnung unterscheidet, dass es mit der Temperatur des Topfes verknüpft ist, und einen zweiten Schritt zum Berechnen eines rauschkompensierten Ausgabesignals**.

15. Induktionserwärmungssystem nach Anspruch 14, wobei das Erwärmungssystem Leistungstransistoren umfasst, wobei die Regeleinheit in der Lage ist, die Schaltfrequenz der Leistungstransistoren konstant zu halten, wobei das gemessene elektrische Signal zeitabhängig variiert und mit der Temperatur des Garbehälters verknüpft ist, und wobei das gemessene elektrische Signal vorzugsweise die Leistung oder der Strom ist, die / der vom Erwärmungssystem aufgenommen wird.

**Revendications**

1.  Procédé de détection et de compensation des effets de perturbations dans la commande de systèmes de chauffage par induction, dans lequel la température du récipient de cuisson et/ou de son contenu est contrôlé et/ou commandé sur la base d'au moins une mesure électrique en corrélation avec ladite température et, en particulier, de l'effet des mouvements du récipient de cuisson et/ou de la fluctuation de tension de la ligne du secteur et de bruits électriques similaires, **caractérisé en ce que** le procédé comprend une première étape définie comme une détection du bruit électrique présenté dans la ou les grandeurs électriques ciblées, en corrélation avec le procédé physique ciblé qui est commandé ou contrôlé, dans lequel le bruit se distingue de la grandeur électrique réelle variant en fonction du temps qui est en corrélation avec la température du pot, et une seconde étape de calcul d'un signal de sortie compensé en bruit.

2.  Procédé selon la revendication 1, dans lequel le système de chauffage par induction comprend des transistors de puissance, dans lequel la fréquence de commutation desdits transistors de puissance est maintenue constante et le signal électrique mesuré varie avec le temps et est en corrélation avec la température du récipient de cuisson, le signal électrique étant de préférence la puissance ou le courant absorbé(e) par le système de chauffage.

3.  Procédé selon la revendication 1, dans lequel le système de chauffage par induction comprend des transistors de puissance, dans lequel la puissance délivrée au récipient de cuisson est maintenue constante et le signal électrique mesuré varie avec le temps et est en corrélation avec la température du récipient de cuisson, le signal électrique étant de préférence la fréquence de commutation des transistors de puissance.

4.  Procédé selon la revendication 1, dans lequel le système de chauffage par induction comprend des transistors de puissance, dans lequel le courant absorbé par le dispositif est maintenu constant et le ou les signaux électriques mesurés varie(nt) en fonction du temps ou est/sont en corrélation avec la température du récipient de cuisson, le signal électrique étant de préférence la fréquence de commutation des transistors de puissance.

5.  Procédé selon la revendication 1, dans lequel la température du récipient de cuisson ou de son contenu est maintenue constante en utilisant un ou plusieurs signaux électriques mesurés qui sont en corrélation avec la température du récipient de cuisson ou de son contenu, respectivement, le signal électrique mesuré étant de préférence la puissance ou le courant absorbé(e) par le système de chauffage.

6.  Procédé selon l'une quelconque des revendications précédentes, dans lequel la commande du système de chauffage par induction est obtenue par une combinaison d'une ou plusieurs des commandes décrites dans les revendications précédentes et le signal électrique mesuré varie en fonction du temps et est en corrélation avec la température du récipient de cuisson.

7.  Procédé selon la revendication 6, dans lequel la commande du système de chauffage par induction est obtenue sous la forme d'un motif répétitif de deux ou plusieurs commandes décrites dans les revendications précitées.

8.  Procédé selon l'une quelconque des revendications précédentes, dans lequel la détection et/ou la compensation des perturbations est ou sont basées sur le contrôle de la première dérivée du signal.

9.  Procédé selon les revendications 1 à 8, dans lequel la compensation des perturbations est calculée sur la base de l'application d'un décalage correspondant à la différence entre les signaux avant et après le changement qui est ajouté au signal ou soustrait de celui-ci.

10. Procédé selon les revendications 1 à 8, dans lequel la compensation des perturbations est calculée sur la base des critères suivants :

$$K_{niveau} = \int_{|v|} (P_a)$$

$$K_{norme} = \frac{P_a}{P_b}$$

$$P_{\substack{a+i \\ i=1,2,\ldots,n}} = K_{niveau}.K_{norme}.P_{a+i}$$

où :

P est le signal électrique mesuré ;

$K_{niveau}$ est un coefficient ou une fonction $f_{|v|}$ du niveau de puissance ;

$K_{norme}$ est un facteur de normalisation ;

$P_b$ est la dernière valeur du signal avant qu'une perturbation n'ait été détectée ;

$P_a$ est la première valeur du signal après la fin de la perturbation ; et

$P_{a+i}$ sont les valeurs du signal après $P_a$.

11. Procédé selon l'une quelconque des revendications précédentes, dans lequel le signal est coupé après la détection d'un changement et n'est pas utilisé dans la commande pour le calcul d'une valeur de compensation sur un intervalle de temps prédéterminé.

12. Procédé selon l'une quelconque des revendications 1 à 10, dans lequel, une fois que le changement est détecté, le signal est maintenu constant pendant un intervalle de temps prédéterminé et égal à la valeur du signal avant que le changement ne soit détecté.

13. Procédé selon l'une quelconque des revendications précédentes, dans lequel le paramètre électrique est choisi dans le groupe constitué de la fréquence, du courant, de la tension, du facteur de puissance ou de leurs combinaisons.

14. Système de chauffage par induction, en particulier pour le chauffage de récipients de cuisson ou analogues, qui comprend une unité de commande susceptible de détecter et/ou de compenser les effets de perturbations sur le système de chauffage par induction, qui contrôlent et/ou règlent la température du récipient de cuisson et/ou de son contenu sur la base d'au moins une mesure électrique en corrélation avec sa température, en particulier l'effet des mouvements du récipient de cuisson et/ou la fluctuation de la tension sur la ligne de secteur et tout autre bruit de mesure électrique, **caractérisé en ce que** cette unité de commande est à même d'effectuer une première étape définie comme une détection du bruit électrique présenté dans la ou les grandeurs électriques ciblées en corrélation avec le processus physique ciblé qui est commandé ou contrôlé, le bruit se distinguant de la grandeur électrique réelle variant en fonction du temps qui est en corrélation avec la température du pot et une seconde étape de calcul d'un signal de sortie compensé en bruit.

15. Système de chauffage par induction selon la revendication 14, dans lequel le système de chauffage comprend des transistors de puissance, dans lequel l'unité de commande est à même de maintenir constante la fréquence de commutation desdits transistors de puissance, le signal électrique mesuré variant avec le temps et étant en corrélation avec la température du récipient de cuisson, ce signal électrique mesuré étant de préférence la puissance ou le courant absorbé(e) par le système de chauffage.

**Figure 1**

**Figure 2**

**Figure 3**

**Figure 4**

Temperature time process of a pot containing water

Power time process of a pot containing water

**Figure 5**

Raw input electrical magnitude signal → Noise detection → Noise-type → Compensation filter → Compensated output Electrical magnitude → Induction

**Figure 6**

Temperature time process of a pot containing water

Power time process of a pot containing water

**Figure 7**

Figure 8

Figure 9

Figure 10

**Figure 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0217684 A2
- EP 1732357 A2
- EP 1420613 A2